# EUROPÄISCHE PATENTSCHRIFT

(11) **EP 1 106 910 B1**
(45) Veröffentlichungstag und Bekanntmachung des Hinweises auf die Patenterteilung: **08.02.2006**
(21) Anmeldenummer: 00126935.6
(22) Anmeldetag: 08.12.2000
(51) Int. Cl.: F21S 8/12, F21V 14/04, B60Q 1/00

(54) **Beleuchtungsvorrichtung für Fahrzeuge**
Vehicle lighting assembly
Dispositif d' éclairage pour véhicules

(30) Priorität: 11.12.1999 DE 19959910
(43) Veröffentlichungstag der Anmeldung: 13.06.2001
(73) Patentinhaber: Hella KGaA Hueck & Co., 59552 Lippstadt (DE)
(72) Erfinder: Eichhorn, Karsten, Dr., 59320 Ennigerloh (DE)

(56) Entgegenhaltungen:
- EP-A- 0 501 669
- DE-U- 29 909 033
- US-A- 5 422 792

## Beschreibung

Die Erfindung betrifft eine Beleuchtungsvorrichtung für Fahrzeuge nach dem Oberbegriff des Patentanspruchs 1.

Aus der EP 0 678 699 B1 ist eine Beleuchtungsvorrichtung für Fahrzeuge bekannt, die zur Erzeugung einer vorgegebenen Lichtverteilung, beispielsweise eine Abblendlicht-, Femlicht- oder Nebellichtfunktion, entsprechend geformte Lichtauskoppelelemente aufweist, die im Randbereich einer Fahrzeugaußenhaut angeordnet sind. Das Lichtauskoppelelement ist über einen Lichtleiter mit einer ortsfem angeordneten Lichtquelle verbunden. Nachteilig an der bekannten Beleuchtungsvorrichtung ist, dass durch eindeutige Zuordnung des Lichtauskoppelelementes zu dem Lichtleiter bzw. zur Lichtquelle die dadurch erzeugte Lichtfunktion eindeutig festgelegt ist.

Aus der DE 43 13 914 A1 ist eine Beleuchtungsvorrichtung für Fahrzeuge bekannt, bei der mehrere Lichtauskoppelelemente zur Erzeugung verschiedener Lichtverteilungen vorgesehen sind. Die Lichtauskoppelelemente sind jeweils über Lichtleiter mit einer gemeinsamen Lichtquelle oder mit jeweils zugeordneten Lichtquellen optisch verbunden. Zur Erzeugung vorgegebener Lichtverteilungen, die abhängig von dem Umgebungsbedingungen des Fahrzeuges sein können, ist es nach der bekannte Beleuchtungsvorrichtung vorgesehen, einzelne Lichtauskoppelelemente zuzuschalten oder durch Ausblendung nicht wirksam werden zu lassen. Nachteilig an der bekannte Beleuchtungsvorrichtung ist jedoch, dass durch die Ausblendung der gesamte optische Weg zwischen der Lichtquelle und dem Lichtauskoppelelement nicht mehr nutzbar ist.

Aus der EP 0 501 669 A2 ist eine Beleuchtungsvorrichtung für Fahrzeuge bekannt, die zur Erzeugung einer vorgegebenen Lichtverteilung einen Lichtfunktionsselektor aufweist, der das von einer Lichtquelle ausgesandte Licht wahlweise an über Lichtleiter gekoppelte Lichtauskoppelelemente verteilt. In einem Gehäuse sind jeweils mehrere Lichtauskoppelelemente zu einem Lichtmodul zusammengefasst. Nachteilig an der bekannten Vonichtung ist, dass zur Erzeugung einer Lichtverteilung nur ein einziges Lichtauskoppelelement des Lichtaustrittsmoduls mittels des Lichtfunktionsselektors angesteuert wird.

Aus der US 5 422 792 A ist eine Beleuchtungsvorrichtung für Fahrzeuge bekannt, die über eine Mehrzahl von in einem Lichtaustrittsmodul angeordneten Lichtauskoppelelementen verfügt. Die Lichtauskoppelelemente sind über Lichtleiter mit einer gemeinsamen Lichtquelle verbunden. An einem Lichtaustrittsende des Lichtleiters ist ein Lichtfunktionsselektor als ein verschwenkbares Reflexionselement angeordnet, so dass das aus dem Lichtleiter austretende Licht zu unterschiedlichen Lichtauskoppelelementen zur Erzeugung unterschiedlicher Lichtverteilungen geleitet wird. Es ist nicht vorgesehen, dass in einer Stellung des Lichtfunktionsselektors zwei jeweils unterschiedliche Lichtverteilungen er zeugende Lichtauskoppelelemente des Lichtaustrittsmoduls Licht zugeführt werden.

Aus der DE 299 09 033 U1 ist eine Beleuchtungsvorrichtung für Fahrzeuge bekannt, die eine Lichtquelle vorsieht, der mittels eines Lichtfunktionsselektors jeweils ein Lichtleiter zuordbar ist zur Erzeugung einer vorgegebenen Lichtverteilung. Den Lichtleitem sind jeweils Lichtauskoppeletemente zugeordnet, mittels derer die vorgegebene Lichtverteilung erzeugt wird.

Aufgabe der vorliegenden Erfindung ist es, eine Beleuchtungsvorrichtung für Fahrzeuge derart weiterzubilden, dass auf einfache Weise die Erzeugung der Lichtfunktionen flexibler gestaltet wird.

Zur Lösung dieser Aufgabe weist die Erfindung die Merkmale des Patentanspruchs 1 auf.

Die erfndungsgemäße Beleuchtungsvorrichtung weist einen Lichtfunktionsselektor auf, der eine optische Entkopplung eines Lichtauskoppelelementes von einer entfernt angeordneten Lichtquelle ermöglicht. Beispielsweise kann zum einen eine Lichtquelle mit verschiedenen und/oder mehreren Lichtauskoppelelementen verbunden sein. Zum anderen kann ein Lichtauskoppelelement mit mehreren Lichtquellen gleichzeitig oder nacheinander verbunden werden, so dass beispielsweise bei Ausfall einer ersten Lichtquelle diese durch eine zweite Lichtquelle ersetzt werden kann zur Aufrechterhaltung der vorgegebenen Lichtfunktion. Nach der Erfindung ist es vorgesehen, dass die Ansteuerung der Lichtauskoppelelemente nicht durch Ein-/Ausschalten der Lichtquellen erfolgt, sondern durch den Lichtfunktionsselektor, der das Lichtsignal einer oder mehrerer Lichtquellen zu dem vorgegebenen Lichtauskoppelelement durchschaltet. Hierdurch ergibt sich eine erhöhte Flexibilität bei der Lichtführung. Weiterhin kann durch die Erfindung die Betriebssicherheit der Beleuchtungsvorrichtung verbessert werden. Darüber hinaus kann der Freiraum für das Design der vorzugsweise als Scheinwerfer ausgebildeten Beleuchtungsvorrichtung erhöht werden. Erfindungsgemäß wird eine Lichtfunktion durch Kombination mindestens zweier Lichtauskoppelelemente erzeugt, die jeweils eine segmentartige Grundlichtverteilung erzeugen. Vorteilhaft kann durch Addition standardisierter Grundlichtverteilungen eine Mehrzahl von Lichtfunktionen, beispielsweise eine Femlicht-, Abblendlicht- und Nebellichtfunktion erzeugt werden. Vorteilhaft können durch diese "Segmentierung" der Lichtverteilung in Abhängigkeit von den Umgebungsbedingungen auf einfache Weise weitere Lichtfunktionen generiert werden. Beispielsweise können weitere, von den Fahrbedingungen abhängige Zusatzlichtverteilungen erzeugt werden, wobei eine optimal abgestimmte Lichtfunktion generiert wird. Beispielsweise kann in Abhängigkeit von dem Dämmerungsgrad der Umgebung durch Überblenden von Lichtverteilungen selbsttätig und kontinuierlich eine Anpassung der Lichtfunktion an den Umgebungsbedingungen erzeugt werden. Darüber hinaus ist es auch möglich, in Abhängigkeit von Sensorsignalen weitere Lichtfunktionen selbsttätig zu aktivieren. Beispielsweise kann bei Detektion von Nebel, das Nebellicht selbsttätig eingeschaltet bzw. zum Abblendlicht hinzugeschaltet werden.

Nach einer bevorzugten Ausführungsform der Erfindung ist der Lichtfunktionsselektor im Bereich einer Lichteinkoppeleinheit angeordnet. Hierdurch erfolgt die Durchschaftung des Lichtsignals in einem der Lichtquelle nahen Bereich. Das Lichtauskoppelelement kann starr mit einem diesem zugeordneten Lichtleiter verbunden sein. Der Bauraumbedarf im Austrittsbereich (Scheinwerferbereich) des Lichtbündels kann hierdurch verringert werden.

Nach einer bevorzugten Ausführungsform der Erfindung weist die Lichteinkoppeleinheit ein jeweils einer Lichtquelle zugeordnetes Lichtumlenkelement auf, das verschwenkbar ausgebildet ist. Das Lichtumlenkelement lenkt das von einer Lichtquelle emittierte Licht in Richtung auf einen vorgegebenen Lichtleiter. Vorteilhaft ergibt sich hierdurch ein einfacher konstruktiver Aufbau der Lichteinkoppeleinheit, der eine zuverlässige Lichteinkopplung in die jeweiligen Lichtleiter ermöglicht.

Nach einer Weiterbildung der Erfindung ist das Lichtumlenkelement als ein Reflektor ausgebildet, der in mindestens zwei Lichteinkoppelpositionen bringbar ist. Vorteilhaft ermöglicht der Reflektor einen relativ hohen Lichtstrom, der in den jeweiligen Lichtleiter einkoppelbar ist.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: ein Blockschaltbild einer erfindungsgemäßen Beleuchtungsvorrichtung,
- Figur 2: ein Blockschaltbild von unterschiedlichen Grundlichtfunktionen, die im Zusammenwirken eines Endes eines Lichtleiters mit der Formgebung eines Lichtauskoppelelementes gebildet wird,
- Figur 3: eine Darstellung der Grundlichtverteilung nach einem ersten Ausführungsbeispiel,
- Figur 4: eine Darstellung der Grundlichtverteilung nach einem zweiten Ausführungsbeispiel,
- Figur 5: eine Darstellung der Grundlichtverteitung nach einem dritten Ausführungsbeispiel und
- Figur 6: eine Darstellung der Grundlichtverteilung nach einem vierten Ausführungsbeispiel.

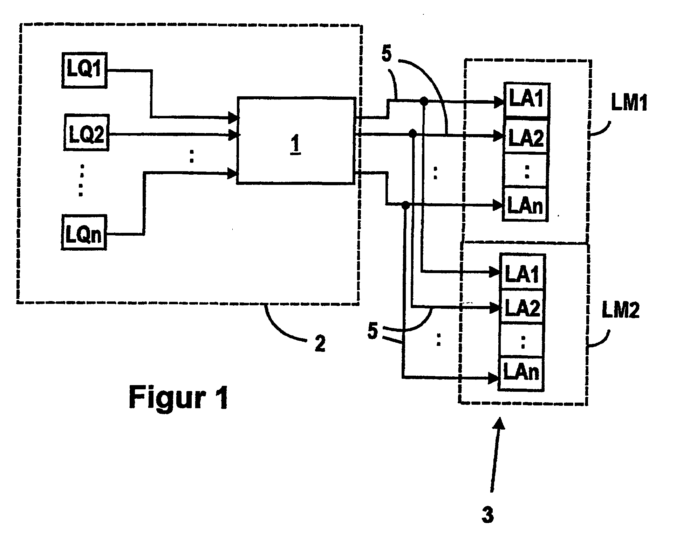

In Figur 1 ist ein Lichtfunktionsselektor 1 für eine Beleuchtungsvorrichtung schematisch dargestellt, der Bestandteil einer Lichteinkoppeleinheit 2 ist. Die Lichteinkoppeleinheit 2 ist gebildet durch den Lichtfunktionsselektor 1 sowie einer Mehrzahl von Lichtquellen LQ₁, LQ₂... LQₙ und ist entfernt von einem Lichtaustrittsbereich 3 angeordnet, der aus einer Mehrzahl von Lichtaustrittsmodulen LM₁ ... LMₙ besteht. Die Lichtaustrittsmodule LM₁... LMₙ sind jeweils einem gesonderten nicht dargestellten Gehäuse, vorzugsweise einem Scheinwerfergehäuse, zugeordnet.

Jedes Lichtmodul LM₁ ... LMₙ besteht aus einer Mehrzahl von Lichtauskoppelelementen LA₁, LA₂... LAₙ, die in Verbindung mit jeweils zugeordneten Lichtaustrittsflächen 4 von optisch in Verbindung mit dem Lichtfunktionsselektor 1 stehenden Lichtleitern 5 eine Grundlichtverteilung 6 erzeugen.

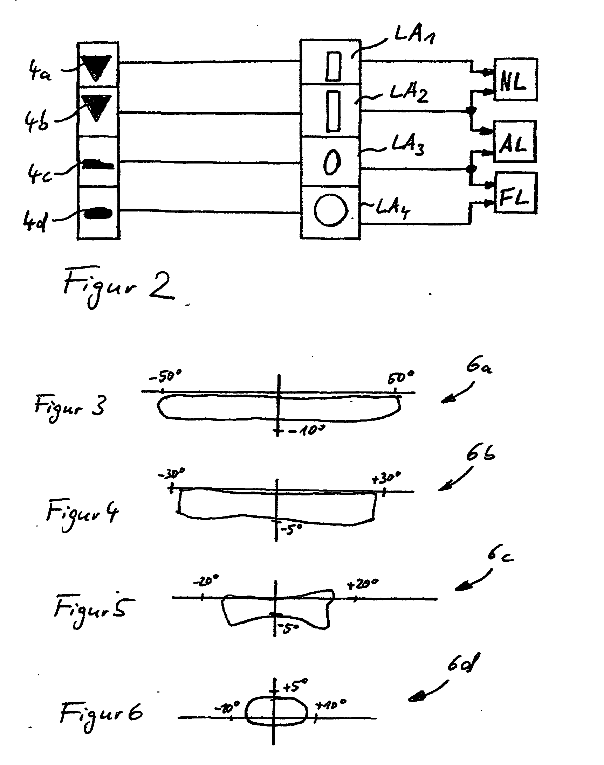

Nach einem bevorzugten Ausführungsbeispiel gemäß Figur 2 bis 6 kann der Lichtfunktionsselektor 1 dazu genutzt werden, wahlweise unterschiedliche Lichtauskoppelelemente LA₁, LA₂, LA₃, LA₄ eines in einem vorderen rechten Scheinwerfergehäuse eines Kraftfahrzeugs untergebrachten Lichtaustrittsmodul LM₁ und eines mit gleichen Lichtaustrittsmodulen LA₁, LA₂, LA₃, LA₄ ausgestatteten und in einem vorderen linken Scheinwerfergehäuse angeordneten Lichtmoduls LM₂ anzusteuern. Zu diesem Zweck erstrecken sich die Lichtleiter 5 paarweise von dem Lichtfunktionsselektor 1 zu den Lichtmodulen LM₁ und LM₂.

Wie aus Figur 2 in Verbindung mit Figur 3, 4, 5 und 6 besser zu ersehen ist, werden vier Grundlichtverteilungen 6a, 6b, 6c und 6d erzeugt, die jeweils durch optische Verknüpfung einer Lichtaustrittsfläche 4a, 4b, 4c, 4d des Lichtleiters 5 (in Figur 2 ist vereinfacht der Querschnitt der Lichtaustrittsflächen 4a, 4b, 4c, 4d dargestellt) mit den Lichtauskoppelelementen LA₁, LA₂, LA₃, LA₄ erzeugt werden. ln Figur 2 ist der Querschnitt bzw. die Draufsicht auf ein Lichtauskoppelelement LA₁, LA₂, LA₃, LA₄ dargestellt. Somit bildet die erste Grundlichfirerteilung 6a, die durch Ansteuerung des ersten Lichtauskoppelelementes LA₁ hervorgerufen wird, eine breite horizontal gestreute Lichtverteilung unterhalb der Hell-/Dunkel-Grenze. Diese Grundlichtverteilung 6a kann vorzugsweise in Verbindung mit der zweiten Grundlichtverteilung 6b, die einer symmetrischen Abblendlichtverteilung gleichkommt, ein Nebellicht NL bilden. Durch gemeinsame Ansteuerung der Grundlichtverteilung 6b mit einer Grundlichtverteilung 6c, die eher zu einer zentralen Abblendlichtverteilung mit einer 15°-Steigung korrespondiert, kann ein Abblendlicht AL erzeugt werden. Durch Kombination der Grundlichtverteilung 6c mit einer Grundlichtverteilung 6d, die einen zentralen Lichtfleck mit Bereichen oberhalb der Hell-/Dunkel-Grenze liefert, kann ein Femlicht FL erzeugt werden.
Zur Erzeugung der Lichtfunktionen Abblendlicht AL, Nebellicht NL, Fernlicht FL sind die Lichtauskoppelelemente LA₁, LA₂, LA₃, LA₄ eines jeden Lichtaustrittsmoduls LM₁, LM₂ über jeweils einen Lichtleiter 5 mit dem Lichtfunktionsselektor 1 verbunden.

Zur Ansteuerung der entsprechenden Lichtauskoppeletemente LA₁, LA₂, LA₃, LA₄ weist der Lichtfunktionsselektor 1 eine Mehrzahl von jeweils einer Lichtquelle LQ₁, LQ₂ zugeordneten und als Reflektor ausgebildeten Lichtumlenkelementen auf, die durch Verschwenken um einen relativ kleinen Winkel bezüglich einer Lichteintrittsmittelebene der jeweiligen Lichtleiter auf die entsprechenden Lichteintrittsflächen der lichtleiter 5 ausgerichtet werden. Jeder Lichtquelle LQ₁, LQ₂ sind zwei Lichtleiter 5 zugeordnet, die sich in Lichtausbreitungsrichtung verzweigen zu den jeweiligen Lichtmodulen LM₁, LM₂. Der Lichtfunktionsselektor 1, der zwischen den Lichtquellen LQ₁, LQ₂ einerseits und den Lichtauskoppelelementen LA₁, LA₂, LA₃, LA₄ andererseits angeordnet ist, ermöglicht somit eine flexible und dadurch, dass er entfernt von den Lichtauskoppelelementen LA₁, LA₂, LA₃, LA₄ angeordnet ist, eine platzsparende Ansteuerung derselben zur Bildung von vorgegebenen Lichtfunktionen AL, FL, NL.

Wie aus Figur 2 ersichtlich ist, sind die Lichtauskoppelelemente LA₁, LA₂ im wesentlichen rechteckförmig angeordnet, während die Lichtauskoppelelemente LA₃, LA₄ ellipsenförmig bzw. kreisrund ausgebildet sind. Die Lichtaustrittsflächen 4a und 4b sind jeweils dreieckförmig mit einer nach oben verlaufenden Spitze, die Lichtaustrittsflächen 4c im wesentlichen rechteckförmig mit einer Stufung und die Lichtaustrittsfläche 4d ellipsenförmig ausgebildet

Die Lichtquellen LQ₁, LQ₂ sind in einem bevorzugten Punkt, insbesondere einem Brennpunkt, der ellipsenförmig ausgebildeten Reflektoren angeordnet. Die Lichtquellen LQ₁, LQ₂, LQₙ sind jeweils als Gasentladungslampen ausgebildet. Der Lichtleiter 5 ist vorzugsweise als zweiarmiger, aus heißverschmolzenen Teillichtleitern bestehender Lichtleiter ausgebildet.

## Patentansprüche

1. Beleuchtungsvorrichtung für Fahrzeuge
- mit mindestens einem Lichtauskoppelelement (LA₁, LA₂, LA₃, LA₄, LAₙ) zur Erzeugung einer vorgegebenen Lichtverteilung (6a, 6b, 6c, 6d),
- mit mindestens einem in jeweils einem Gehäuse angeordneten Lichtaustrittsmodul (LM₁, LM₂, LMₙ), in dem mehrere Lichtauskoppelelemente (LA₁, LA₂, LA₃, LA₄, LAₙ) untergebracht sind,
- mit mindestens einer entfernt von dem Lichtauskoppelelement (LA₁, LA₂, LA₃, LA₄, LAₙ) angeordneten Lichtquelle (LQ₁, LQ₂, LQₙ).
- mit mindestens einem Lichtleiter (5) zum Verbinden der Lichtquelle (LQ₁, LQ₂, LQₙ) mit dem Lichtauskoppelelement (LA₁, LA₂, LA₃, LA₄, LAₙ),
- wobei eine Mehrzahl von Lichtauskoppeleiementen (LA₁, LA₂, LA₃, LA₄, LAₙ) vorgesehen ist, denen ein Lichtfunktionsselektor (1) vorgelagert ist zur wahlweisen Ansteuerung der Lichtauskoppelelemente (LA₁, LA₂, LA₃, LA₄, LAₙ),
**dadurch gekennzeichnet, dass** mindestens zwei jeweils segmentartige Grundlichtverteilungen (6a, 6b, 6c, 6d) erzeugende und dem Lichtaustrittsmodul (LM₁, LM₂, LMₙ) zugeordnete Lichtauskoppelelemente (LA₁, LA₂, LA₃, LA₄) vorgesehen sind, die zur Bildung einer vorgegebenen Lichtfunktion (NL, AL, FL) zusammenschaltbar sind

2. Beleuchtungsvorrichtung nach Anspruch 1, **dadurch gekennzeichnet, dass** der Lichtfunktionsselektor (1) im Bereich einer Lichteinkoppeleinheit (2) angeordnet ist, in der das von der Lichtquelle (LQ₁, LQ₂, LQₙ) emittierte Licht in einen Lichtleiter (5) einkoppelbar ist.

3. Beleuchtungsvorrichtung nach Anspruch 1 oder 2, **dadurch gekennzeichnet, dass** die Lichteinkoppeleinheit (2) ein jeweils einer Lichtquelle (LQ₁, LQ₂, LQₙ) zugeordnetes Lichtumlenkelement aufweist, das verschwenkbar gelagert ist.

4. Beleuchtungsvorrichtung nach Anspruch 3, **dadurch gekennzeichnet, dass** das Lichtumlenkelement als Reflektor ausgebildet ist, der in mindestens zwei Lichteinkoppelpositionen bringbar ist, in denen jeweils die in einem bevorzugten Punkt (Brennpunkt) gelagerte Lichtquelle (LQ₁, LQ₂, LQₙ) zu unterschiedlichen Lichtleitem (5) ausgerichtet ist.

5. Beleuchtungsvorrichtung nach einem der Ansprüche 1 bis 4, **dadurch gekennzeichnet, dass** der Lichtleiter (5) eine Lichtauskoppelfläche (4a, 4b, 4c, 4d) aufweist, die derart geformt ist, dass sie im Zusammenwirken mit dem dem Lichtleiter (5) zugeordneten Lichtauskoppelelement (LA₁, LA₂, LA₃, LA₄, LAₙ) die vorgegebene Grundlichtverteilung (6a, 6b, 6c, 6d) erzeugt wird.

6. Beleuchtungsvorrichtung nach einem der Ansprüche 1 bis 5, **dadurch gekennzeichnet, dass** die Anzahl der in Lichtausbreitungsrichtung dem Lichtfunktionsselektor (1) nachgeordneten Lichtleiter (5) zu der Anzahl der Lichtauskoppelelemente (LA₁, LA₂, LA₃, LA₄, LAₙ) korrespondiert.

7. Beleuchtungsvorrichtung nach einem der Ansprüche 1 bis 6, **dadurch gekennzeichnet, dass** die Grundlichtverteilungen (6a, 6b, 6c, 6d) derart ausgebildet sind, dass eine Lichtfunktion (AL, FL, NL) durch Kombination von zwei Grundlichtverteilungen (6a, 6b, 6c, 6d) erzeugbar ist.

8. Beleuchtungsvorrichtung nach einem der Ansprüche 1 bis 7, **dadurch gekennzeichnet, dass** die Lichtquellen (LQ₁, LQ₂, LQₙ) als Gasentladungslampen ausgebildet sind.

9. Beleuchtungsvorrichtung nach einem der Ansprüche 1 bis 8, **dadurch gekennzeichnet, dass** der Lichtleiter (5) als zweiarmiger, als mit zwei stoffschlüssigen Teillichtleiter aufweisender Lichtleiter (5) ausgebildet ist.

## Claims

1. Lighting device for vehicles, comprising
- at least one light-decoupling element (LA₁, LA₂, LA₃, LA₄, LAₙ) for producing a predetermined light distribution (6a, 6b, 6c, 6d),
- at least one light-exit module (LM₁, LM₂, LMₙ) arranged in a respective housing and in which a plurality of light-decoupling elements (LA₁, LA₂, LA₃, LA₄, LAₙ) are accommodated,
- at least one light source (LQ₁, LQ₂, LQₙ) arranged at a distance from the light-decoupling element (LA₁, LA₂, LA₃, LA₄, LAₙ), and
- at least one fibre-optic light guide (5) for connecting the light source (LQ₁, LQ₂, LQₙ) to the light-decoupling element (LA₁, LA₂, LA₃, LA₄, LAₙ),
a plurality of light-decoupling elements (LA₁, LA₂, LA₃, LA₄, LAₙ) being provided, with an upstream light function selector (1) for activating the light-decoupling elements (LA₁, LA₂, LA₃, LA₄, LAₙ) as required, **characterised in that** at least two light-decoupling elements (LA₁, LA₂, LA₃, LA₄) each producing a segmental basic light distribution (6a, 6b, 6c, 6d) and associated with the light-exit module (LM₁, LM₂, LMₙ) are provided and can be connected together to form a predetermined light function (NL, AL, FL).

2. Lighting device according to claim 1, **characterised in that** the light function selector (1) is arranged in the region of a light-coupling unit (2) in which the light emitted by the light source (LQ₁, LQ₂, LQₙ) can be coupled into a fibre-optic light guide (5).

3. Lighting device according to claim 1 or claim 2, **characterised in that** the light-coupling unit (2) has a light-deflecting element which is associated with a respective light source (LQ₁, LQ₂, LQₙ) and is pivotably mounted.

4. Lighting device according to claim 3, **characterised in that** the light-deflecting element is designed as a reflector which can be brought into at least two light-coupling positions in which the respective light source (LQ₁, LQ₂, LQₙ) mounted at a preferred point (focal point) is aligned with different fibre-optic light guides (5).

5. Lighting device according to one of claims I to 4, **characterised in that** the fibre-optic light guide (5) has a light-decoupling surface (4a, 4b, 4c, 4d) which is formed in such a manner that it produces the predetermined basic light distribution (6a, 6b, 6c, 6d) in conjunction with the light-decoupling element (LA₁, LA₂, LA₃, LA₄, LAₙ) associated with the fibre-optic light guide (5).

6. Lighting device according to one of claims 1 to 5, **characterised in that** the number of fibre-optic light guides (5) arranged downstream of the light function selector (1) in the direction of light propagation corresponds to the number of light-decoupling elements (LA₁, LA₂, LA₃, LA₄, LAₙ).

7. Lighting device according to one of claims 1 to 6, **characterised in that** the basic light distributions (6a, 6b, 6c, 6d) are designed in such a manner that a light function (AL, FL, NL) can be produced by a combination of two basic light distributions (6a, 6b, 6c, 6d).

8. Lighting device according to one of claims 1 to 7, **characterised in that** the light sources (LQ₁, LQ₂, LQₙ) are designed as gas-discharge lamps.

9. Lighting device according to one of claims 1 to 8, **characterised in that** the fibre-optic light guide (5) is designed as a two-armed fibre-optic light guide (5) having two integral partial fibre-optic light guides.

## Revendications

1. Dispositif d'éclairage pour véhicules, comportant
- au moins un élément de découplage de lumière (LA₁, LA₂, LA₃, LA₄, LAₙ) pour produire une distribution prédéterminée de lumière (6a,6b,6c,6d),
- au moins un module de sortie de lumière (LM₁, LM₂, MLₙ), disposé dans un boîtier respectif et dans lequel sont logés plusieurs éléments de découplage de lumière (LA₁, LA₂, LA₃, LA₄, LAₙ),
- au moins une source de lumière (LQ₁, LQ₂, LQₙ) disposée en étant éloignée de l'élément de découplage de lumière (LA₁, LA₂, LA₃, LA₄, LAₙ),
- au moins un guide de lumière (5) pour relier la source de lumière (LQ₁, LQ₂, LQₙ) à l'élément de découplage de lumière (LA₁, LA₂, LA₃, LA₄, LAₙ),
- dans lequel il est prévu une multiplicité d'éléments de découplage de lumière (LA₁, LA₂, LA₃, LA₄, LAₙ), en avant desquels est disposé un sélecteur de fonction de lumière (1) permettant de commander au choix les éléments de découplage de lumière (LA₁, LA₂, LA₃, LA₄, LAₙ),
**caractérisé en ce qu'**il est prévu au moins deux éléments de découplage de lumière (LA₁, LA₂, LA₃, LA₄), qui produisent des distribution de lumière de base respectives en forme de segments (6a,6b,6c,6d) et sont associés au module de sortie de lumière (LM₁, LM₂, LMₙ) et qui peuvent être interconnectés pour former une fonction prédéterminée de lumière (NL, AL, FL).

2. Dispositif d'éclairage selon la revendication 1, **caractérisé en ce que** le sélecteur de fonction de lumière (1) est disposé au voisinage d'unités d'injection de lumière (2), dans laquelle la lumière émise par la source de lumière (LQ₁, LQ₂, LQₙ) peut être injectée dans un guide de lumière (5).

3. Dispositif d'éclairage selon la revendication 1 ou 2, **caractérisé en ce que** l'unité d'injection de lumière (2) comporte un élément de déviation de lumière, qui est associé respectivement à une source de lumière (LQ₁, LQ₂, LQₙ), qui est montée de manière à pouvoir pivoter.

4. Dispositif d'éclairage selon la revendication 3, **caractérisé en ce que** l'élément de déviation de lumière est agencé sous la forme d'un réflecteur qui peut être amené dans au moins deux positions d'injection de lumière, dans lesquelles respectivement la source de lumière (LQ₁, LQ₂, LQₙ) montée en un point préféré (foyer) est orientée vers différents guides de lumière (5).

5. Dispositif d'éclairage selon l'une des revendications 1 à 4, **caractérisé en ce que** le guide de lumière (5) possède une surface de découplage de lumière (4a,4b,4c,4d), qui est formée de telle sorte qu'elle produit la distribution de lumière de base prédéterminée (6a, 6b, 6c, 6d) en coopération avec l'élément de découplage de lumière (LA₁, LA₂, LA₃, LA₄, LAₙ) associé au guide de lumière (5).

6. Dispositif d'éclairage selon l'une des revendications 1 à 5, caractéristique en ce que le nombre des guides de lumière (5) disposés en aval du sélecteur de fonction de lumière (1), dans la direction de propagation de la lumière, correspond au nombre des éléments de découplage de lumière (LA₁, LA₂, LA₃, LA₄, LAₙ) .

7. Dispositif d'éclairage selon l'une des revendications 1 à 6, **caractérisé en ce que** les distributions des lumières de base (6a,6b,6c,6d) sont agencées de telle sorte qu'une fonction de lumière (AL,FL,NL) peut être produite par combinaison de deux distributions de lumière de base (6a,6b,6c,6d).

8. Dispositif d'éclairage selon l'une des revendications 1 à 7, **caractérisé en ce que** les sources de lumière (LQ₁, LQ₂, LQₙ) sont agencées sous la forme de lampes à décharge dans un gaz.

9. Dispositif d'éclairage selon l'une des revendications 1 à 8, **caractérisé en ce que** le guide de lumière (5) est agencé sous la forme d'un guide de lumière (5) à deux branches, comportant deux guides de lumière partiel compatibles du point de vue des matériaux.
